# FASCICULE DE BREVET EUROPEEN

(11) **EP 1 880 910 B1**
(45) Date de publication et mention de la délivrance du brevet: **31.03.2010**
(21) Numéro de dépôt: 07111978.8
(22) Date de dépôt: 06.07.2007
(51) Int. Cl.: B60S 1/52, B60S 1/56

(54) **Dispositif de lavage d'une surface transparente ou réfléchissante, notamment la glace d'un projecteur d'un véhicule automobile**
Vorrichtung zum Reinigen einer transparenten oder spiegelnden Oberfläche, insbesondere des Scheinwerferglases eines Kraftfahrzeugs
Device for washing a transparent or reflecting surface, in particular the glass of an automobile headlight

(30) Priorité: 21.07.2006 FR 0606714
(43) Date de publication de la demande: 23.01.2008
(73) Titulaire: VALEO VISION, 93012 Bobigny (FR)
(72) Inventeur: Vraux, Didier, 93140 Bondy (FR)
(74) Mandataire: Renous Chan, Véronique

(56) Documents cités:
- EP-A1- 0 508 853
- EP-A2- 0 262 402
- WO-A-01/02221
- WO-A1-03/095277
- FR-A1- 2 836 842
- US-A1- 2003 075 207

## Description

L'invention concerne un dispositif de lavage pour une surface substantiellement transparente ou réfléchissante, notamment la glace de fermeture d'un dispositif d'éclairage et/ou de signalisation d'un véhicule, notamment d'une glace de fermeture d'un projecteur automobile. L'invention concerne également un projecteur équipé de ou associé à un tel dispositif, et un véhicule équipé d'un tel dispositif de lavage.

Ce genre de dispositif de lavage est utilisé de manière courante dans le domaine de l'automobile pour nettoyer les glaces de projecteurs au cours de la circulation du véhicule. Il comprend une ou plusieurs buses ou gicleurs alimentés en liquide de lavage sous pression. Ces buses ou gicleurs sont placés en avant de la glace du projecteur à une distance déterminée, et ils projettent le liquide en direction de la glace du projecteur pour effectuer son nettoyage.

Pour une meilleure efficacité du lavage et un meilleur aérodynamisme les buses ou gicleurs sont montés sur un organe télescopique intégré dans la carrosserie du véhicule, notamment le pare-choc ou la calandre. Un tel mode de construction est décrit par exemple dans la demande de brevet EP581672. L'organe télescopique est intégré dans le pare-choc, il comprend un corps qui est fixé au véhicule, et une tige coulissante qui traverse la paroi du pare-choc. L'organe télescopique est alimenté par le liquide de lavage qui est canalisé jusqu'aux gicleurs. La sortie de la tige se produit avec la mise en route de la pompe sous l'action de la pression du liquide. Un ressort de rappel comprimé par le mouvement de sortie de la tige assure la rentrée de la tige une fois le lavage terminé.

Les déplacements de la tige de l'organe télescopique doivent être rapides et précis. Egalement il faut éviter tout écoulement de liquide de lavage lorsque les gicleurs ne sont pas en position de lavage. Pour ces raisons, certains organes télescopiques sont équipés d'un dispositif d'alimentation qui laisse passer le liquide sous pression seulement lorsque la tige est entièrement sortie et les gicleurs sont en position, et qui interrompt l'alimentation en liquide dès le début de rentrée de la tige. De cette façon, on a une alimentation franche en liquide de lavage.

Parmi les dispositifs existants de ce genre, on peut citer ceux qui sont décrits dans les demandes de brevet EP262402, EP511104, FR2704497, FR2796866. Ces documents décrivent des cavités par lesquelles le liquide de lavage passe pour atteindre le gicleur. Ces cavités sont accessibles seulement lorsque la tige est en position sortie, et elles sont obstruées le reste du temps empêchant l'alimentation en eau des gicleurs.

Ces dispositifs donnent de bons résultats mais ils manquent de précision. En effet le dégagement ou l'obstruction des cavités est réalisé avec un mouvement de la tige. Au début du lavage, le gicleur est alimenté en liquide de lavage alors que le mouvement de la tige n'est pas complètement achevé. A l'arrêt, la tige entame sa rentrée alors que l'alimentation du gicleur n'est pas encore coupée.

On connaît également le dispositif qui est décrit dans la demande de brevet FR2836842. La tige porte un joint d'étanchéité souple qui forme un piston et qui est mobile le long de la tige contre la force de rappel du ressort de rappel de la tige. Lorsque la tige arrive en bout de course, la pression du liquide agit sur le joint qui continue son mouvement le long de la tige, ouvrant alors à l'arrière de la tige un passage en direction du gicleur. Le fonctionnement de cette construction est plus précis, en effet l'alimentation du gicleur en liquide de lavage n'est établie que lorsque la tige est complètement sortie. Cependant le joint remplit une double fonction de guidage et d'étanchéité et aussi bien du côté du corps que du côté de la tige. Dans ces conditions le joint a une forme spécifique qui est complexe à réaliser. Le montage est compliqué, en effet la base de la tige doit être assemblée au reste de la tige après mise en place du joint. Au cours du temps, il se produit une usure mécanique, et alors il n'est pas sûr que les différentes fonctions d'étanchéité perdurent. Du fait de la faible différence de diamètre entre l'extrémité de la tige et le piston et aussi du fait de l'usure mécanique, le tarage de la pression d'ouverture du passage peut varier dans le temps. De ce fait, la consommation de liquide de lavage devient variable dans le temps.

Le document EP0508853 décrit un dispositif de lavage dans lequel le piston est fixe par rapport à la tige du vérin. La tige comprend une cavité communiquant par une ouverture avec la chambre arrière, remplie lors de l'alimentation en liquide du vérin. Cette ouverture est fermée par une valve à bille, maintenue plaquée contre les bords de l'ouverture par un ressort. Quand la tige arrive en bout de course, le piston est bloquée et la bille est alors actionnée, dégageant ainsi l'ouverture.

Compte tenu de cet art antérieur, il existe un besoin pour un dispositif de lavage qui est amélioré en ce que sa construction est plus simple et plus fiable, moins sensible à l'usure mécanique et en ce que son montage est simplifié.

Ce but et d'autres avantages qui apparaîtront au cours de la description qui va suivre sont atteints par le dispositif de l'invention.

Le dispositif de lavage de l'invention comprend un organe télescopique avec un corps ayant un sommet et une base, une tige mobile relativement au corps, un conduit d'alimentation d'un gicleur monté au sommet de la tige, un piston logé dans le corps, le piston étant guidé en coulissement le long de la tige, une butée de retenue du piston relativement à la tige en direction de la base du corps, un dispositif de rappel élastique de la tige et du piston vers la base du corps.

Un clapet est présent à l'extrémité de la tige située vers la base du corps, le clapet possède une tête de clapet qui coopère avec un siège aménagé dans le piston, la tête et son siège étant faits en une matière rigide.

On comprend par « rigide » au sens de l'invention le fait que le matériau utilisé soit ni souple ni flexible, pas ou substantiellement pas, déformable, comme par exemple un polymère rigide du type résine acétal.

Outre les caractéristiques principales qui viennent d'être mentionnées le dispositif de lavage selon l'invention peut présenter une ou plusieurs caractéristiques complémentaires parmi les suivantes :
- le siège est traversant pour la tête de clapet ;
- l'ouverture du siège de clapet et la tête de clapet ont en section un diamètre sensiblement égal ;
- le clapet forme un ensemble monobloc avec la tige ;
- la tête de clapet est reliée au reste de la tige par une portion de paroi ajourée ;
- le piston comprend un corps de piston tubulaire qui est traversé par la tige et une embase de diamètre élargi ;
- un joint est placé entre la base de la tige et le corps de piston ;
- le piston est retenu sur la tige par des pattes de retenue logées dans des saignées longitudinales ;
- la tige comprend deux portions de tige assemblées bout à bout ; préférentiellement la portion de tige inférieure porte le clapet et que le piston est monté coulissant le long de cette portion de tige ;
- le dispositif de lavage comprend un seul dispositif de rappel élastique, à savoir celui rappelant la tige ;

L'invention concerne aussi un projecteur ayant une surface transparente ou réfléchissante comprenant ou étant associé à un dispositif de lavage selon la présente invention.

L'invention sera mieux comprise en se référant à la description ci-dessous et aux dessins qui lui sont attachés.

La figure 1 est une vue générale d'un dispositif selon l'invention, le porte-gicleur étant représenté dans ses deux positions.

Les figures 2 et 3 représentent le vérin du dispositif de lavage dans son état de repos.

La figure 4 montre le vérin dans son état de service.

La figure 5 est une vue partielle montrant la base du vérin dans la position d'obturation du clapet.

La figure 6 est une vue partielle du sommet du vérin qui montre le clapet dans son état d'ouverture.

La figure 7 représente un vérin selon un autre mode de mise en oeuvre de l'invention.

La figure 8 est une vue en section du vérin de la figure précédente.

La figure 9 est une vue agrandie du vérin au niveau piston et du système à clapet.

Dans la suite de la description les termes tels que "haut", "bas", base", "sommet" ou autres qui sont employés doivent être interprétés par rapport à la représentation du dispositif dans les dessins et non par rapport à la position du dispositif sur un véhicule. En effet sur un véhicule le dispositif peut être monté en position verticale, horizontale ou autre, selon les contraintes liées à son environnement.

De plus, les figures montrent les vérins sous différentes orientations, de ce fait il arrive que ses éléments constitutifs soient représentés sous des angles différents.

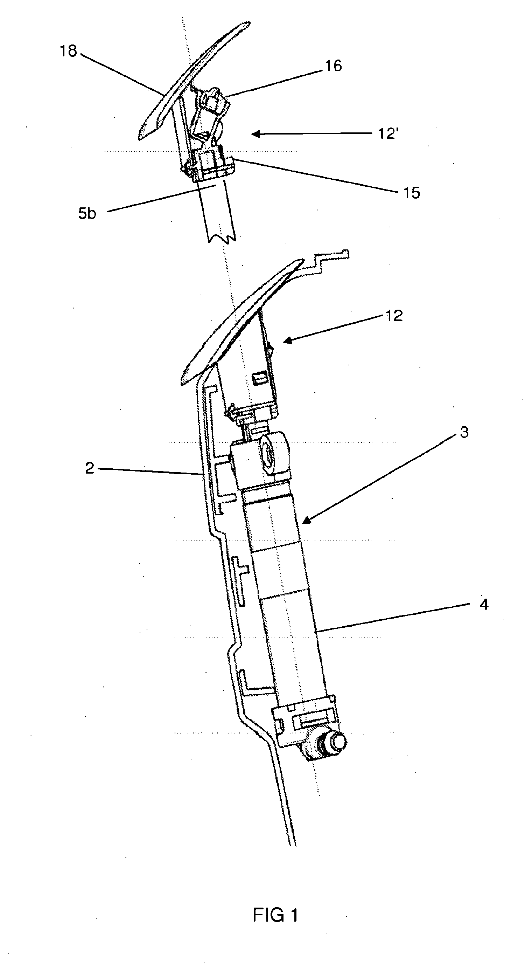

La figure 1 montre un dispositif de lavage monté dans le pare-choc d'un véhicule qu'on a schématisé en 2. Par exemple le dispositif est monté dans le pare-choc à proximité d'un projecteur équipé d'une glace de projecteur.

Le dispositif de lavage comprend un vérin télescopique 3 avec un corps tubulaire 4 qui est fixé solidairement au véhicule par tout moyen approprié, et par exemple des oreilles, ou par des pattes, un collier, une bride ou autre.

Une tige 5 est montée coulissante relativement au corps.

Un porte-gicleur est assemblé à l'extrémité supérieure 5b de la tige 5. Le porte-gicleur est représenté dans la figure 1 en vue de côté et en coupe dans ses deux positions extrêmes repérées par les références 12 et 12' qui correspondent respectivement aux états de repos et de service du dispositif de lavage. C'est la pression d'alimentation en liquide de lavage qui détermine le passage du dispositif d'un état à l'autre.

De façon connue, le porte-gicleur comprend une monture 15 qui est fixée à l'extrémité 5b de la tige 5. Par exemple la monture 15 du porte-gicleur est assemblée par emmanchement à l'extrémité 5b de la tige 5, et elle est retenue par une épingle élastiquement déformable dont les branches se logent dans des encoches de la monture et de la tige. D'autres modes d'assemblage peuvent aussi convenir.

Un gicleur 16 est assemblé sur la monture 15. Le gicleur est alimenté en liquide de lavage sous pression via la tige 5 et la monture 15, et il est chargé de projeter ce liquide en direction de la glace du projecteur à nettoyer. L'orientation du gicleur et sa distance par rapport à la glace du projecteur sont par ailleurs déterminées pour optimiser les conditions dans lesquelles le liquide de lavage est projeté sur la surface à nettoyer. Ceci est à la portée de l'homme du métier. D'autres modes de construction peuvent aussi convenir, en particulier le ou les gicleurs peuvent former une seule pièce avec le porte-gicleur. On peut équiper aussi le porte-gicleur avec d'autres accessoires pour faire varier l'orientation du jet de liquide au cours du lavage et ainsi améliorer son efficacité. De tels dispositifs sont aussi connus de l'homme du métier.

La monture est chapeautée par un capot 18 qui est plaqué contre le pare-choc dans l'état de repos du dispositif de lavage, masquant ainsi l'ouverture que traverse la tige 5.

D'autres modes de construction du dispositif de lavage et de son environnement sur le véhicule peuvent également convenir.

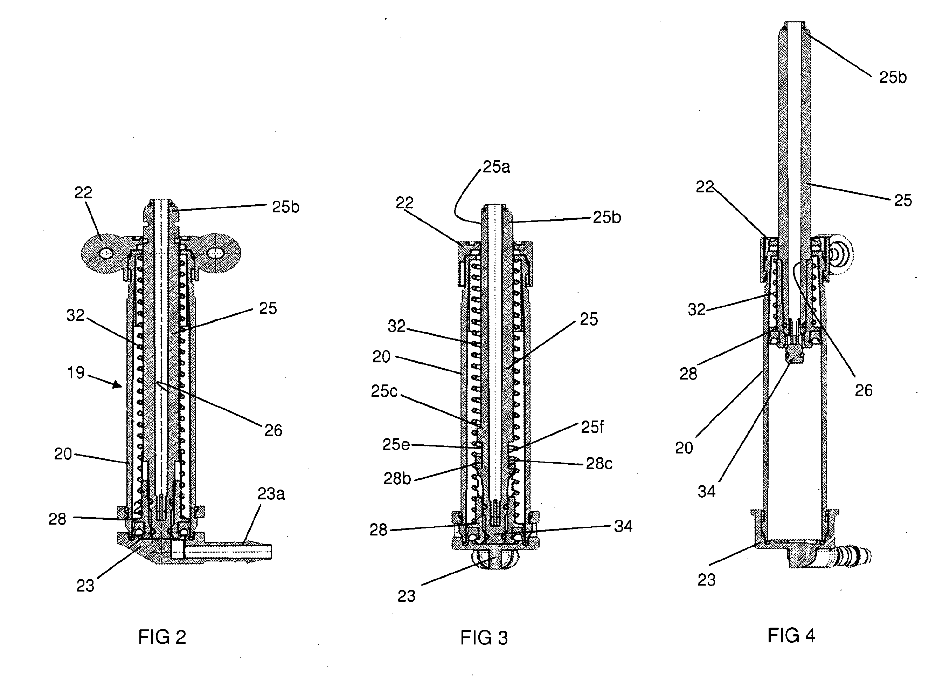

Un vérin télescopique 19 réalisé selon un premier mode de mise en oeuvre de l'invention est représenté dans les figures 2 à 6.

Le vérin comprend un corps cylindrique 20 qui est fermé au sommet par un bouchon de guidage 22 traversé par une tige de vérin 25 et à la base par un bouchon d'alimentation 23. Le corps, la tige et les bouchons sont réalisés en tout matériau approprié et notamment en matière plastique. De façon avantageuse, les bouchons sont rapportés sur le corps et ils sont assemblés par tout moyen approprié, notamment par encliquetage, emmanchement, collage. Cela permet de réaliser des vérins de courses ou de caractéristiques différentes avec un certain nombre de pièces communes. Le bouchon de guidage porte ici des oreilles latérales qui sont prévues pour l'assemblage du vérin à la carrosserie du véhicule. D'autres modes de construction peuvent également convenir.

La tige de vérin 25 est creuse, elle est traversée longitudinalement par un conduit 26 qui débouche au sommet 25b de la tige pour l'alimentation du gicleur en liquide de lavage. Le bouchon d'alimentation 23 est équipé d'un embout 23a sur lequel peut être emmanché un tuyau d'alimentation. D'autres modes d'alimentation conviennent également.

La tige de vérin est indexée angulairement par rapport au corps par tout moyen approprié, et par exemple ici par un méplat longitudinal 25a qui coopère avec une forme correspondante du bouchon de guidage 22.

Une butée de fin de course est également prévue pour bloquer la tige 25 en position de service du dispositif de lavage. Par exemple, la butée de fin de course est formée par un épaulement 25c qui se trouve à la base du méplat 25a et qui coopère avec le bouchon de guidage 22. D'autres moyens conviennent aussi. Ainsi, en position de service du vérin, le gicleur occupe une position précise par rapport à la glace du projecteur.

Un piston 28 est présent à la base de la tige 25. Le piston délimite dans le corps du vérin une chambre arrière à volume variable qui est accessible via l'embout d'alimentation 23a. Il est réalisé en une matière solide, par exemple une matière plastique.

Le piston 28 est monté coulissant le long de la base 25d de la tige 25. Le piston 28 est guidé par rapport à la tige, par exemple, comme cela est représenté dans les figures il a un corps tubulaire 28a qui est traversé par la tige.

L'embase 28b du piston a un diamètre élargi, elle supporte un joint à lèvre 30 qui assure l'étanchéité avec le corps. Un joint d'étanchéité, par exemple un joint torique 31 logé dans une gorge à la base de la tige, assure l'étanchéité entre le corps 28a du piston et la base de la tige 25. D'autres dispositifs d'étanchéité peuvent aussi convenir.

Une butée double limite le débattement du piston 28 par rapport à la tige 25, par exemple deux saignées longitudinales 25e, 25f diamétralement opposées à la base de la tige 25 dans lesquelles circulent des pattes de retenue 28c, 28d du piston 28. Les pattes sont situées à l'extrémité de languettes, ce qui permet d'engager les pattes dans les saignées, par déformation élastique des languettes.

Les pattes coopèrent avec les épaulements aux extrémités des saignées pour limiter la course du piston relativement à la tige. D'autres modes de construction peuvent également convenir, notamment une seule butée de retenue en direction de la base de la tige.

Un dispositif de rappel élastique rappelle la tige 25 vers la base du corps de vérin 20, et rappelle également le piston 28 vers la base de la tige. Selon le mode de réalisation illustré, ce dispositif est un ressort de compression 32 dont les spires sont traversées par la tige 25. Les extrémités du ressort de compression sont en appui d'un côté contre le sommet du corps 20, et de l'autre contre l'embase 28b du piston.

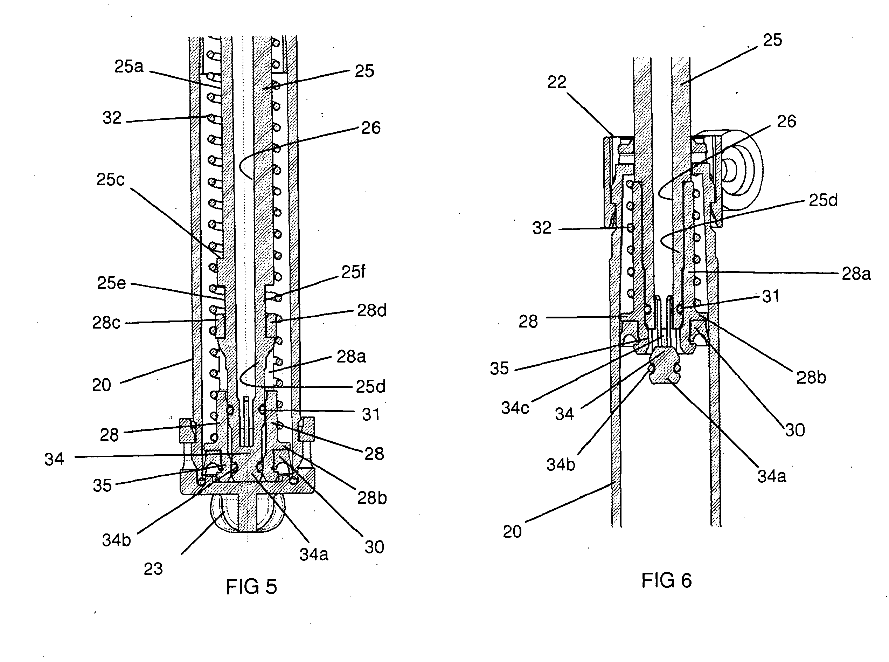

Le ressort est prévu en fonction de la longueur du vérin et la course de la tige de telle façon qu'en position de repos, le ressort exerce une précontrainte résiduelle non nulle sur le piston et la tige, et qu'en position de service, les spires du ressort restent écartées les unes des autres afin de ne pas entraver le mouvement de la tige et du piston. La contrainte résiduelle doit être cependant suffisante pour que le rappel de la tige vers sa position de repos soit rapide et précis. On a obtenu de bons résultats avec un ressort dont la contrainte sur le piston varie entre 12 Newtons en position de repos, et 50 à 55 Newtons en position de service de la tige. Ces valeurs sont toutefois indicatives. Dans les figures 4 et 6 qui représentent la tige en position de service, seules une partie des spires du ressort est représentée.

A la base de la tige, un système à clapet contrôle le passage du liquide de lavage vers le conduit 26 de la tige. Selon le mode de réalisation illustré, le système à clapet comprend un clapet 34 qui est mobile solidairement avec la tige 25, et un siège de clapet 35 qui est mobile solidairement avec le piston 28.

Le clapet et le siège de clapet sont réalisés en une matière solide, notamment une matière plastique rigide pour obtenir un bon fonctionnement de l'un par rapport à l'autre sur le plan du guidage et de l'étanchéité.

Le clapet 34 comprend une tête de clapet 34a de section circulaire et un joint 34b d'étanchéité avec le siège 35 qui est par exemple un joint torique engagé dans une gorge de la tête de clapet. Dans sa zone de plus grande section, le diamètre de la tête est environ égal au tiers du diamètre intérieur de la chambre arrière du vérin. De préférence, de chaque côté de cette zone de plus grande section un chanfrein extérieur est présent pour faciliter la mise en place et le mouvement de la tête de clapet relativement à son siège. Au-dessus de la tête 34a, la tête de clapet est reliée au reste de la tige par une portion ajourée 34c qui donne accès au conduit 26 de la tige. Le clapet est assemblé par tout moyen approprié au reste de la tige, il peut être réalisé d'une seule pièce avec le reste de la tige ou alors être rapporté et fixé solidairement par exemple à l'aide de pattes élastiques.

Le siège de clapet 35 a une section circulaire dont le diamètre est égal au diamètre de la tête de clapet, au jeu de fonctionnement près. De préférence, de chaque côté de la zone de section circulaire, le siège a un chanfrein intérieur qui facilite la mise en place et le mouvement de la tête de clapet. La hauteur du siège est sensiblement égale à la hauteur de la tête.

Ainsi, le système à clapet présente deux états actifs, un état d'obturation où la tête de clapet est logée dans le siège et obture l'ouverture du siège, et un état d'ouverture où la tête de clapet est complètement dégagée du siège, libérant ainsi le passage vers le conduit 26 de la tige.

Les figures 5 et 6 montrent le clapet dans son état d'obturation et d'ouverture, respectivement. Comme on peut s'en rendre compte dans ces figures, la position des butées entre le piston et la tige est déterminée de telle façon que dans l'état de repos de la tige, le ressort 32 rappelle le piston 28 jusqu'à une position de butée où la tête de clapet est engagée dans l'ouverture du siège de clapet, et dans l'état de service, la tête de clapet est dégagée du siège comme le représente en particulier la figure 6.

Le siège de clapet 35 est traversant, c'est à dire que le piston est creux sur toute sa longueur et qu'en section l'ouverture du siège est la zone de plus petit diamètre. Au montage le piston peut être enfilé sur le clapet et la base de la tige. De plus, la tête de clapet trouve son logement dans le siège sans opération additionnelle d'assemblage de pièces.

Le dispositif qui vient d'être décrit fonctionne de la façon suivante. Dans son état de repos, la tige est rentrée dans le vérin, le clapet bloque le passage de tout liquide en direction du gicleur. Lorsque le liquide de lavage est mis sous pression, le liquide pénètre dans la chambre arrière du vérin et repousse la tige et le piston vers le sommet du corps contre la force de rappel du ressort 32. Pendant toute cette phase le clapet demeure en position d'obturation. Puis la tige se bloque en fin de course. Le liquide sous pression continue à agir sur le piston qui poursuit sa course provoquant ainsi le dégagement de la tête de clapet hors de son siège. Le liquide peut passer dans le conduit 26 jusqu'au gicleur. Le lavage a alors lieu.

Dès que la pression de liquide cesse, le ressort agit en premier lieu sur le piston qu'il ramène contre sa butée de retenue. Le clapet se retrouve en position d'obturation. Le gicleur n'est plus alimenté en liquide. Les chanfreins de la tête de clapet et du siège facilitent et l'engagement et le centrage du clapet relativement à son siège. Les frottements des joints 31 et 34b offrent peu de résistance au mouvement du piston relativement à la tige.

Puis le ressort ramène la tige vers sa position basse, refoulant au passage le liquide qui est contenu dans la chambre arrière du vérin. Comme le clapet obture le siège, et que la pression de liquide entre le clapet et le gicleur a complètement chuté, le gicleur ne bave pratiquement pas durant cette phase de retour vers l'état de repos. En position de repos, la tige 25 est rappelée par le ressort jusqu'à ce qu'elle arrive au contact de la base du corps, ou jusqu'à ce qu'un élément porté par la tige arrive en butée contre un élément fixe, par exemple le capot 18 contre le pare-choc 2.

Ainsi le dispositif de lavage selon l'invention est réalisable avec des éléments de forme simple qui peuvent être facilement obtenus par moulage d'une matière plastique, et il utilise également des éléments d'étanchéité couramment disponibles. Le montage est également très simple à réaliser. Le guidage des éléments mobiles, les frottements et l'étanchéité sont des fonctions qui sont bien maîtrisées du fait que la tête de clapet et son siège sont réalisés en une matière solide.

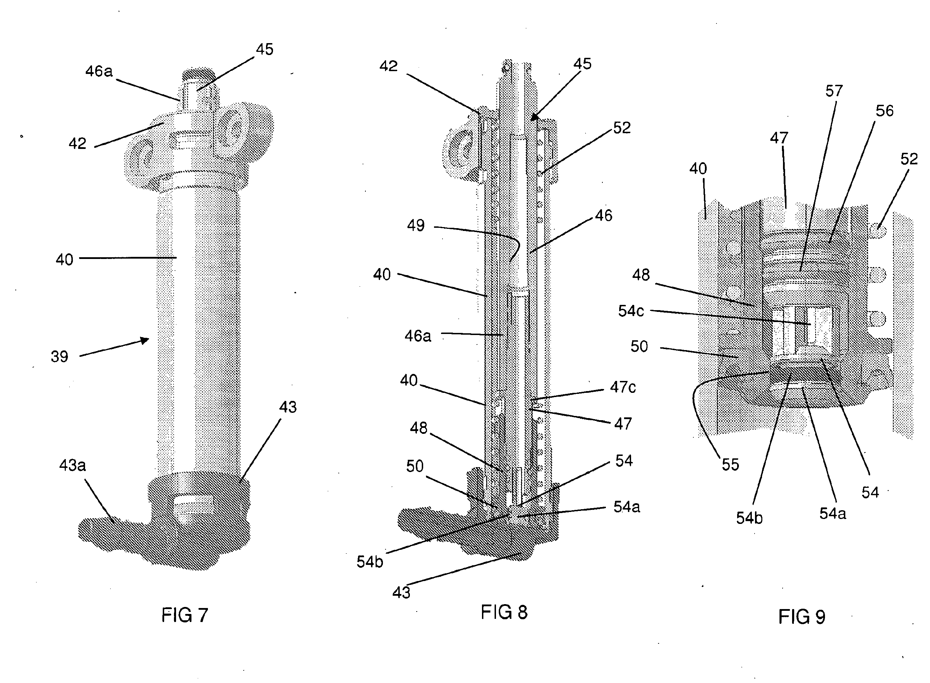

Les figures 7 à 9 illustrent un autre mode de construction d'un vérin 39. La différence principale avec le mode de construction précédent est que la tige 45 du vérin est construite en deux portions 46 et 47 qui sont mises bout à bout. Un tel mode de construction est avantageux pour construire plusieurs vérins de longueur et de course différentes avec un grand nombre de pièces communes. Cela apparaîtra plus clairement dans la suite.

Comme précédemment le vérin comprend un corps 40 avec à son sommet un bouchon 42 de guidage et à sa base un bouchon d'alimentation 43 ayant un embout 43a. Les bouchons sont assemblés au corps par tout moyen approprié, emmanchement à force, collage, soudage, vissage, encliquetage d'éléments complémentaires, ou encore un des bouchons peut former un ensemble monobloc avec le corps. La tige 45 est ici indexée angulairement par rapport au bouchon de guidage 42 par une ou plusieurs nervures en saille telle que la nervure 46a qui s'étend le long de la portion supérieure 46 de la tige 45. De plus le bouchon de guidage présente des oreilles latérales pour l'assemblage du vérin à la carrosserie du véhicule. D'autres modes de construction conviennent également.

La tige 45 est composée de deux portions, une portion supérieure 46 et une portion inférieure 47. Les deux portions sont emboîtées l'une dans l'autre, et elles sont retenues par encliquetage d'éléments complémentaires. Les deux portions peuvent également être assemblées par tout autre moyen approprié. Les deux portions 46 et 47 sont creuses pour former le conduit 49 d'alimentation du gicleur. De préférence il est prévu un dispositif d'étanchéité à la jonction des deux portions, par exemple comme cela est représenté on peut prévoir une succession de bosses annulaires dans la zone d'emboîtement des portions.

De préférence, la portion inférieure 47 présente une collerette de retenue 47c en saillie. Cette collerette forme avec le bouchon de guidage 42 une butée de fin de course pour le mouvement de sortie de la tige 45. La portion inférieure 47 est fixée à la portion supérieure 46 à l'aide d'ergots non représentés (ou tout système mécanique équivalent, du type clips).

Un piston 48 est monté coulissant le long de la portion inférieure 47 de la tige. Selon ce qui est représenté, le piston est construit de la même façon que le piston précédent, avec un corps de piston qui coulisse le long de la portion de tige 47, une embase et un joint 50 supporté par l'embase.

Un dispositif de rappel rappelle la tige 45 et le piston 48 en direction de la base du corps 40. Par exemple le dispositif est un ressort de compression 52 dont les extrémités s'appuient d'un côté sur le bouchon de guidage 42 et de l'autre sur l'embase du piston 48. Dans la figure 8 le ressort 52 est représenté en partie seulement, notamment sa partie médiane est absente. Comme précédemment une butée limite la course du piston relativement à la tige 45 en direction de la base de la tige.

La portion inférieure 47 de la tige porte le clapet 54. Comme précédemment le clapet 54 présente une tête de clapet 54a, un joint de clapet 54b, et la tête de clapet est reliée au reste de la tige par une portion ajourée 54c qui donne accès au conduit 49.

Le clapet 54 coopère avec un siège de clapet 55 qui est situé à la base du piston 48. Deux joints toriques 56 et 57 assurent l'étanchéité au-dessus du clapet 54 entre la portion inférieure de tige 47 et le piston 48. Un seul joint peut également convenir. Comme précédemment le clapet et son siège sont réalisés en une matière solide, par exemple une matière plastique. De façon avantageuse il est possible de les fabriquer d'une seule pièce respectivement avec la portion inférieure de la tige et le piston. De plus, le siège 55 est traversant pour la tête de clapet, c'est à dire que l'ouverture du siège est en section la zone de plus petit diamètre du piston 48 pour qu'au montage le piston puisse être enfilé sur la tête de clapet 54a, et qu'en fonctionnement la tête puisse se dégager vers l'arrière du siège.

Le fonctionnement de ce mode de construction est identique à ce qui a été décrit précédemment pour le mode de construction précédent.

On retrouve aussi les mêmes avantages que précédemment. En plus il est ici possible de construire le dispositif de lavage avec des sous-ensembles qui sont communs à des vérins de longueur et de course différentes. Seuls le corps, la portion supérieure de tige et le bouchon de guidage sont des éléments spécifiques. Les autres éléments sont communs à un ensemble de vérins de type différent.

Naturellement la présente description n'est donnée qu'à titre indicatif, et l'on pourrait adopter d'autres mises en oeuvre de l'invention sans pour autant sortir du cadre tel que défini dans les revendications.

En particulier le dispositif de rappel élastique pourrait comprendre deux ressorts distincts, l'un agissant sur la base de la tige et l'autre agissant entre la base de la tige et le piston. Les joints toriques pourraient être logés de façon différente ou être remplacés par d'autres types de joints.

## Revendications

1. Dispositif de lavage pour le lavage d'une surface transparente ou réfléchissante, notamment d'une glace de fermeture d'un dispositif d'éclairage et./ou de signalisation automobile, ledit dispositif ayant au moins un gicleur (16) alimenté en liquide de lavage, et comprenant un organe télescopique (3, 19, 39) avec un corps (4, 20, 40) ayant un sommet et une base, une tige (5, 25, 45) mobile relativement au corps, un conduit d'alimentation (26, 49) d'un gicleur (16) monté au sommet de la tige, un piston (28, 48) logé dans le corps, le piston étant guidé en coulissement le long de la tige (25, 45), une butée de retenue du piston relativement à la tige en direction de la base du corps, un dispositif de rappel élastique (32, 52) de la tige (25, 45) et du piston (28, 48) vers la base du corps, **caractérisé par le fait qu'**un clapet est présent à l'extrémité de la tige située vers la base du corps, que le clapet possède une tête de clapet (34a, 54a) qui coopère avec un siège (35, 55) aménagé dans le piston (28, 48), et que la tête (34a, 54a) et le siège (35, 55) sont faits dans une matière rigide.

2. Dispositif selon la revendication 1, **caractérisé par le fait que** le siège (35, 55) est traversant pour la tête de clapet (34a, 54a).

3. Dispositif selon la revendication 2, **caractérisé par le fait que** l'ouverture du siège de clapet (35, 55) et la tête de clapet (34a, 54a) ont en section un diamètre sensiblement égal.

4. Dispositif selon l'une quelconque des revendications précédentes, **caractérisé par le fait que** le clapet (34, 54) forme un ensemble monobloc avec la tige (25, 45).

5. Dispositif selon la revendication 4, **caractérisé par le fait que** la tête de clapet (34a, 54a) est reliée au reste de la tige (25, 45) par une portion de paroi ajourée (34c, 54c).

6. Dispositif selon l'une quelconque des revendications précédentes, **caractérisé par le fait que** le piston comprend un corps de piston tubulaire (28a) qui est traversé par la tige et une embase (28b) de diamètre élargi.

7. Dispositif selon l'une quelconque des revendications précédentes, **caractérisé par le fait qu'**un joint (31, 56, 57) est placé entre la base de la tige (25, 45) et le corps de piston (28, 48).

8. Dispositif selon l'une quelconque des revendications précédentes, **caractérisé par le fait que** le piston (28) est retenu sur la tige (25) par des pattes de retenue (28c, 28d) logées dans des saignées longitudinales (25e, 25f).

9. Dispositif selon l'une quelconque des revendications précédentes **caractérisé par le fait que** la tige (45) comprend deux portions de tige (46, 47) assemblées bout à bout, la portion de tige inférieure (47) portant le clapet (54) et le piston (48) étant monté coulissant le long de cette portion de tige.

10. Dispositif selon l'une quelconque des revendications précédentes **caractérisé par le fait qu'**il comprend un seul dispositif de rappel élastique (32, 52).

11. Projecteur ayant une surface transparente ou réfléchissante, **caractérisé par le fait qu'**il comprend ou qu'il est associé à un dispositif de lavage selon l'une quelconque des revendications précédentes.

## Claims

1. Washing device, for washing a transparent or reflective surface, in particular a closure glass of a motor vehicle lighting and/or signalling device, the said device having at least one nozzle (16) which is supplied with washing fluid, and comprising a telescopic unit (3, 19, 39) with a body (4, 20, 40) which has a top and a base, a rod (5, 25, 45) which is mobile relative to the body, a supply duct (26, 49) for a nozzle (16) which is fitted at the top of the rod, a piston (28, 48) which is accommodated in the body, the piston being guided in sliding along the rod (25, 45), a stop for retention of the piston relative to the rod in the direction of the base of the body, a device (32, 52) for resilient return of the rod (25, 45) and of the piston (28, 48) towards the base of the body, **characterised in that** a flap valve is present at the end of the rod which is situated towards the base of the body, the flap valve has a flap valve head (34a, 54a) which co-operates with a seat (35, 55) which is provided in the piston (28, 48), and the head (34a, 54a) and the seat (35, 55) are made of a rigid material.

2. Device according to claim 1, **characterised in that** the head of the flap valve (34a, 54a) can pass through the seat (35, 55).

3. Device according to claim 2, **characterised in that** the opening of the seat of the flap valve (35, 55) and the head of the flap valve (34a, 54a) have a diameter which is substantially equal in cross-section.

4. Device according to any one of the preceding claims, **characterised in that** the flap valve (34, 54) forms an assembly in a single piece together with the rod (25, 45).

5. Device according to claim 4, **characterised in that** the head of the flap valve (34a, 54a) is connected to the remainder of the rod (25, 45) by a portion of perforated wall (34c, 54c).

6. Device according to any one of the preceding claims, **characterised in that** the piston comprises a tubular piston body (28a) through which the rod and a base (28b) with an enlarged diameter pass.

7. Device according to any one of the preceding claims, **characterised in that** a seal (31, 56, 57) is placed between the base of the rod (25, 45) and the body of the piston (28, 48).

8. Device according to any one of the preceding claims, **characterised in that** the piston (28) is retained on the rod (25) by retention lugs (28c, 28d) which are accommodated in longitudinal incisions (25e, 25f).

9. Device according to any one of the preceding claims, **characterised in that** the rod (45) comprises two portions of rod (46, 47) which are assembled end to end, the portion of lower rod (47) bearing the flap valve (54), and the piston (48) being fitted such as to slide along this portion of rod.

10. Device according to any one of the preceding claims, **characterised in that** it comprises a single resilient return device (32, 52).

11. Headlight having a transparent or reflective surface, **characterised in that** it comprises, or is associated with, a washing device according to any one of the preceding claims.

## Patentansprüche

1. Waschvorrichtung zum Waschen einer durchsichtigen oder reflektierenden Oberfläche, insbesondere einer Abdeckscheibe einer Kraftfahrzeugbeleuchtungs- und/oder -signalgebungsvorrichtung, wobei die Vorrichtung wenigstens eine mit Waschflüssigkeit gespeiste Spritzdüse (16) besitzt und ein Teleskoporgan (3, 19, 39) aufweist mit einem Körper (4, 20, 40), der über ein Oberteil und eine Basis verfügt, einer relativ zum Körper beweglichen Stange (5, 25, 45), einer Leitung (26, 49) zum Speisen einer am Oberteil der Stange angebrachten Spritzdüse (16), einem im Körper gelagerten Kolben (28, 48), der entlang der Stange (25, 45) gleitend geführt ist, einem Anschlag zum Halten des Kolbens bezüglich der Stange in Richtung der Basis des Körpers, einer Vorrichtung (32, 52) zum elastischen Zurückstellen der Stange (25, 45) und des Kolbens (28, 48) zur Basis des Körpers,
**dadurch gekennzeichnet, dass** ein Ventil an dem zur Basis des Körpers hin angeordneten Ende der Stange vorhanden ist, dass das Ventil einen Ventilkopf (34a, 54a) besitzt, der mit einem im Kolben (28, 48) angeordneten Sitz (35, 55) zusammenwirkt, und dass der Kopf (34a, 54a) und der Sitz (35, 55) aus einem starren Material gefertigt sind.

2. Vorrichtung nach Anspruch 1,
**dadurch gekennzeichnet, dass** der Sitz (35, 55) für den Ventilkopf (34a, 54a) durchgängig ist.

3. Vorrichtung nach Anspruch 2,
**dadurch gekennzeichnet, dass** die Öffnung des Ventilsitzes (35, 55) und der Ventilkopf (34a, 54a) im Querschnitt einen im Wesentlichen gleichen Durchmesser haben.

4. Vorrichtung nach einem der vorhergehenden Ansprüche,
**dadurch gekennzeichnet, dass** das Ventil (34, 54) mit der Stange (25, 45) eine einstückige Anordnung bildet.

5. Vorrichtung nach Anspruch 4,
**dadurch gekennzeichnet, dass** der Ventilkopf (34a, 54a) mit dem Rest der Stange (25, 45) über ein durchbrochenes Wandstück (34c, 54c) verbunden ist.

6. Vorrichtung nach einem der vorhergehenden Ansprüche,
**dadurch gekennzeichnet, dass** der Kolben einen rohrförmigen Kolbenkörper (28a) aufweist, der von der Stange und einem Fuß (28b) mit verbreitertem Durchmesser durchsetzt wird.

7. Vorrichtung nach einem der vorhergehenden Ansprüche,
**dadurch gekennzeichnet, dass** eine Dichtung (31, 56, 57) zwischen der Basis der Stange (25, 45) und dem Körper des Kolbens (28, 48) angeordnet ist.

8. Vorrichtung nach einem der vorhergehenden Ansprüche,
**dadurch gekennzeichnet, dass** der Kolben (28) auf der Stange (25) durch Haltelaschen (28c, 28d) gehalten ist, die in Längsfugen (25e, 25f) lagern.

9. Vorrichtung nach einem der vorhergehenden Ansprüche,
**dadurch gekennzeichnet, dass** die Stange (45) zwei Stangenteile (46, 47) aufweist, die aneinanderstoßend zusammengefügt sind, wobei der untere Stangenteil (47) das Ventil (54) trägt und der Kolben (48) entlang dieses Stangenteils gleitend montiert ist.

10. Vorrichtung nach einem der vorhergehenden Ansprüche,
**dadurch gekennzeichnet, dass** sie eine einzige elastische Rückstellvorrichtung (32, 52) umfasst.

11. Scheinwerfer mit einer durchsichtigen oder reflektierenden Oberfläche,
**dadurch gekennzeichnet, dass** er eine Waschvorrichtung nach einem der vorhergehenden Ansprüche umfasst oder einer solchen zugeordnet ist.
